# FASCICULE DE BREVET EUROPEEN

(11) **EP 3 694 758 B1**
(45) Date de publication et mention de la délivrance du brevet: **19.06.2024**
(21) Numéro de dépôt: 18780199.8
(22) Date de dépôt: 17.09.2018
(51) Int. Cl.: B60W 50/00, B60K 6/00, B60W 20/00

(54) **SYSTEME DE COMMANDE AVEC RESTRICTION DU RATIO DE DISTRIBUTION DU COUPLE**
STEUERSYSTEM MIT BESCHRÄNKUNG DES DREHMOMENTVERTEILUNGSVERHÄLTNISSES
CONTROL SYSTEM WITH RESTRICTION OF THE TORQUE DISTRIBUTION RATIO

(30) Priorité: 09.10.2017 FR 1759429
(43) Date de publication de la demande: 19.08.2020
(73) Titulaire: Stellantis Auto SAS, 78300 Poissy (FR)
(72) Inventeur: MILHAU, Yohan, 78630 ORGEVAL (FR); HABBANI, Ridouane, 92600 ASNIERES SUR SEINE (FR); ROCQ, Gaetan, 78125 LA BOISSIERE ECOLE (FR); GRIGORIE, Simona Corina, 92150 Suresnes (FR)
(86) Numéro de dépôt international: PCT/FR2018/052269
(87) Numéro de publication internationale: WO 2019/073136

(56) Documents cités:
- EP-A1- 2 528 762
- EP-A1- 3 132 966
- FR-A1- 3 014 775

## Description

L'invention a trait au domaine des véhicules automobiles et plus particulièrement à la gestion de la motricité de véhicules disposants de deux trains roulants à roues motrices.

Le document de brevet publié FR 2 980 408 B1 divulgue un procédé de répartition du couple pour un véhicule hybride. L'utilisateur peut permuter le système de commande du groupe motopropulseur entre plusieurs modes de conduite dont un mode quatre roues motrices (AWD) avec moteur thermique allumé. Ce mode de conduite privilégie la motricité du véhicule au détriment de la consommation. L'utilisateur peut néanmoins oublier de désactiver le mode AWD après la situation nécessitant la motricité et ainsi affecter inutilement la consommation du véhicule. Ce document propose donc un basculement progressif du mode AWD vers un mode AWD secondaire où le moteur thermique est éteint, lorsque la distance parcourue par le véhicule depuis l'activation du mode AWD dépasse une valeur seuil. Dans ce système, le couple demandé par le conducteur est réparti entre les différents moyens moteurs et la proportion de couple demandé au moteur thermique est progressivement diminuée et compensée par le couple demandé aux moteurs électriques. Selon le mode de conduite choisi (« Sport », « Propulsion », « Traction », « AWD », etc.) le couple de consigne demandé par le conducteur est réparti en un couple sur le train avant et un couple sur le train arrière. Certains modes de conduite imposent un ratio de répartition du couple entre un couple transmis au train avant et un couple transmis au train arrière. En imposant un tel ratio, la consommation est élevée. A l'inverse, laisser un tel ratio libre et résultant de la mécanique de contact entre les roues et la route peut présenter des risques de glissement en particulier à basse vitesse. Le document EP3132966A1 divulgue un système de commande tel qu'il agit sur les moyens de distribution du couple pour restreindre le ratio de répartition du couple entre le train avant et le train arrière.

L'invention a pour objectif de pallier au moins un des inconvénients de l'état de la technique susmentionné. Plus particulièrement, l'invention a pour objectif de réduire la consommation d'un véhicule sans compromettre la motricité à basse vitesse. L'invention a pour objet un système de commande d'un groupe motopropulseur pour véhicule automobile comprenant deux trains de roues motrices, les deux trains étant indépendamment entraînables, le système de commande contrôlant des moyens de distribution du couple pour distribuer le couple produit par le ou les moyens moteurs du véhicule entre un couple transmis au train avant et un couple transmis au train arrière, le système de commande pouvant fonctionner selon plusieurs modes de conduite sélectionnables par l'occupant du véhicule, dont un mode sélectionné pour lequel l'intervalle n'est 10 pas réduit à une unique valeur pour une vitesse donnée du véhicule (V0), le système étant remarquable en ce qu'il agit sur les moyens de distribution du couple pour restreindre le ratio de répartition du couple entre le train avant et le train arrière à un intervalle borné par une valeur minimale et une valeur maximale qui dépendent de la vitesse du véhicule et du mode de conduite sélectionné, l'intervalle étant croissant ou constant avec la vitesse.

Dit autrement, un intervalle croissant ou constant avec la vitesse se caractérise par le fait que quelle que soit une vitesse v donnée, pour toute vitesse v' supérieure à v, la différence entre la valeur maximale et la valeur minimale à la vitesse v est inférieure ou égale à la différence entre la valeur maximale et la valeur minimale à la vitesse v'.

Les deux trains du véhicule peuvent être entraînés indépendamment, et pilotés pour distribuer le couple du ou des moteurs entre le train avant et le train arrière avec les restrictions voulues. Les deux trains peuvent aussi être entraînés par un ou plusieurs moteur(s) respectif(s), comme par exemple un moteur thermique à l'avant et un moteur électrique à l'arrière. La distribution du couple entre le train avant et le train arrière peut ainsi se faire par la gestion des couples délivrées par le(s) moteur(s) entraînant le train avant et le(s) moteur(s) entraînant le train arrière. Naturellement, dans ce dernier cas, le ratio de distribution du couple peut être limité par les capacités de chacun des moteurs à fournir un couple suffisant, lorsque la consigne de couple (demandée par le conducteur) est élevée.

Les conditions de roulage déterminent le ratio de distribution du couple dans l'intervalle autorisé. Celles-ci sont variées et peuvent comprendre le glissement d'une des roues, le blocage d'une des roues, la dépollution et/ou l'optimisation de la consommation de carburant.

En ne restreignant pas le ratio à une valeur précise, une optimisation de la consommation de carburant peut être atteinte. En excluant des valeurs de ratio extrêmes, le glissement des roues peut être évité.

Il est à noter que le ratio de répartition du couple n'est restreint que dans des conditions de fonctionnement où il n'y a pas de saturation des organes d'entraînement. Ainsi, par exemple si le couple demandé en consigne par le conducteur est élevé, la capacité à délivrer un couple d'un des moteurs peut être atteinte. S'il est possible théoriquement de prioriser le ratio de distribution du couple dans un intervalle donné plutôt que le couple total délivré aux roues, il est plus sécurisant pour le conducteur que la consigne qu'il donne sur la pédale d'accélérateur fasse effectivement accélérer le véhicule. Dans ce cas, la transmission d'un couple total à l'ensemble des trains roulants est priorisée devant la restriction d'un ratio de couple avant/arrière dans un intervalle donné.

Selon un mode avantageux de l'invention, pour au moins un des modes de conduite, la valeur minimale du ratio est constante en-dessous d'une première valeur seuil de vitesse et/ou au-delà d'une seconde valeur seuil ; et/ou la valeur maximale du ratio est constante en-dessous d'une première valeur seuil de vitesse et/ou au-delà d'une seconde valeur seuil ; et/ou la valeur minimale diminue en fonction de la vitesse entre une première valeur seuil de vitesse et une seconde valeur seuil de vitesse ; et/ou la valeur maximale augmente en fonction de la vitesse entre une première valeur seuil de vitesse et une seconde valeur seuil de vitesse.

Les valeurs seuil de vitesse peuvent être différentes pour la courbe du ratio maximal et celle du ratio minimal.

Entre deux valeurs seuil de vitesse, la courbe du ratio maximal et/ou minimal peut être une droite. Elle peut aussi être une courbe avec un point d'inflexion et à pente nulle au niveau des valeurs seuil de vitesse pour ne pas générer d'à-coups et faire régulièrement évoluer la distribution du couple, dans les situations où le ratio est au maximum de l'intervalle ou au minimum et que le véhicule franchit (en accélération ou décélération) une valeur seuil de vitesse.

Selon un mode avantageux de l'invention, au moins l'une des première et seconde valeurs seuil de vitesse d'un mode de conduite diffère de la valeur seuil respective d'un autre mode de conduite. Ainsi pour chaque mode de conduite peut être défini un graphique différent décrivant les intervalles autorisés pour le ratio, en fonction de la vitesse.

Selon un mode avantageux de l'invention, les valeurs minimale et maximale du ratio sont respectivement comprises entre 25 et 35%, et entre 65 et 75% en-dessous d'une vitesse seuil de 10 km/h +/-5 km/h. Ainsi, par exemple, la valeur minimale peut être de 30% en-dessous de 10 km/h et la valeur maximale peut être de 70% en-dessous de 15 km/h.

Selon un mode avantageux de l'invention, les valeurs minimale et maximale du ratio sont respectivement comprises entre 0% et 5%, et entre 95% et 100% au-dessus d'une vitesse seuil de 25 km/h +/-10 km/h. Ainsi, par exemple, la valeur minimale peut être de 0% au-dessus de 35 km/h et la valeur maximale peut être de 98% au-dessus de 32 km/h.

Selon un mode avantageux de l'invention, l'intervalle de valeurs du ratio de distribution du couple est complémentairement restreint par la déclivité, la température extérieure, l'accélération latérale et/ou l'altitude. Ainsi, à titre d'illustration, un intervalle compris entre 30 et 70% à une vitesse donnée peut être restreint à un intervalle de 40 à 55% si la pente de la route qui est parcourue par le véhicule est supérieure à 5%.

Selon un mode avantageux de l'invention, l'intervalle de valeurs du ratio de distribution du couple est complémentairement restreint en fonction de la quantité de couple donné en consigne par le conducteur. Ainsi, à titre d'illustration, un intervalle compris entre 30 et 70% à une vitesse donnée peut être restreint à un intervalle de 50 à 65% si la consigne de couple ordonnée par le conducteur dépasse un seuil, par exemple 80% du couple total délivrable par l'ensemble des moyens moteurs du véhicule.

Selon un mode avantageux de l'invention, lorsque le couple de consigne est positif, l'intervalle entre la valeur minimale et la valeur maximale de ratio de distribution du couple est plus petit que lorsque le couple de consigne est négatif.

Ainsi, il est donné plus de liberté au ratio de répartition du couple lorsque la consigne de couple est négative que lorsque la consigne de couple est positive. Un couple de consigne peut être positif lors d'une phase d'accélération sur route plane. Un couple de consigne peut être négatif lors d'une levée du pied de l'accélérateur.

A titre d'exemple, un intervalle de 30 à 60% peut être prévu à une vitesse donnée lorsque le couple de consigne est positif, alors qu'à la même vitesse (dans le même mode de conduite), l'intervalle peut être de 20 à 70% lorsque le couple de consigne est négatif.

Selon un mode avantageux de l'invention, le système de commande comprend au moins un mode de conduite dans lequel l'intervalle est réduit à une unique valeur pour une vitesse donnée. En d'autres termes, les valeurs minimale et maximale bornant l'intervalle autorisé pour le ratio de distribution du couple sont telles que la valeur maximale est égale à la valeur minimale, et ce pour toutes les vitesses. Dans ce mode, la valeur unique peut varier en fonction de la vitesse. Par exemple, un mode typé « propulsion » peut prévoir un ratio très faible à basse vitesse puis nulle à partir d'une valeur seuil. Un mode « traction pure » comprendra un intervalle réduit à la valeur 100% sur toute la plage de vitesses. Un mode 4x4 intégral peut également être prévu et forcer un ratio qui peut varier avec la vitesse.

Selon un mode avantageux de l'invention, le système de commande peut fonctionner selon plusieurs modes de conduite sélectionnables par l'occupant du véhicule, dont un mode AWD dans lequel les quatre roues sont entraînées, le système de commande étant apte à permuter de manière autonome depuis le mode AWD vers un mode AWD ECO favorisant les économies de consommation lorsqu'un premier événement prédéterminé se produit, le système de commande étant remarquable en ce qu'il est apte à quitter de manière autonome le mode AWD ECO provisoirement lorsqu'un deuxième événement prédéterminé se produit.

La distribution du couple dans le mode AWD ECO est faite selon un ratio couple avant / couple arrière qui est choisi dans un intervalle défini par des valeurs minimales et maximales qui sont fonction de la vitesse.

Par événement « prédéterminé », on entend un événement prévu lors de la conception du véhicule, acquis par auto-apprentissage lors de la conduite, programmé par configuration de l'utilisateur ou résultant du contexte dans lequel se situe le véhicule (date, coordonnées GPS, type de route, etc.).

Le premier événement se produit lorsque le véhicule se trouve dans une situation où le besoin de motricité est moindre. Ce besoin peut s'exprimer par des critères de roulage, de comportement de conduite, de conditions externes, etc.

Lorsque le mode AWD ECO est quitté, ceci se fait de manière autonome et sans action de la part du conducteur. Généralement, c'est le mode AWD qui est privilégié lors de la sortie du mode AWD ECO.

Par « autonome », on entend que la permutation vers et en dehors du mode AWD ECO est opérée par le véhicule sans action de la part du conducteur. Le conducteur peut d'ailleurs ne pas être averti de cette permutation.

Le mode AWD ECO peut aussi être quitté sous l'action du conducteur lorsqu'il sélectionne un autre mode de conduite, parmi lesquels « Sport », « Confort », « Propulsion » ; « Traction », « Zéro émission », etc.

La sortie du mode AWD ECO est dite « provisoire », lorsqu'il est permis au système de manière autonome de retourner au mode AWD ECO sans action de la part du conducteur.

Selon un mode avantageux de l'invention, le système est aussi apte à quitter de manière autonome le mode AWD ECO permanentement lorsqu'un troisième événement prédéterminé se produit.

Une sortie du mode AWD ECO est dite « permanente » lorsqu'un retour au mode AWD ECO est interdit, même si le deuxième événement se produit à nouveau.

L'expression « premier/deuxième/troisième événement » est un abus de langage désignant un événement d'un premier/deuxième/troisième type et non l'occurrence d'un même événement survenant une première, deuxième puis troisième fois chronologiquement.

Selon un mode avantageux de l'invention, le premier événement, basculant le système de commande vers le mode AWD ECO, consiste en : une distance parcourue depuis l'activation du mode AWD supérieure à une valeur seuil ; et/ou une vitesse du véhicule supérieure à une valeur seuil ; et/ou une température extérieure supérieure à une valeur seuil ; et/ou une déclivité inférieure à une valeur seuil ; et/ou une accélération latérale inférieure à une valeur seuil ; et/ou une altitude inférieure à une valeur seuil.

Par exemple, la distance parcourue seuil peut être de plusieurs centaines de mètres ou de plusieurs kilomètres. La vitesse seuil peut être de plusieurs dizaines de kilomètres-heure. La température peut être de dix degrés Celsius. La déclivité peut être mesurée en pourcentage de pente (calculée, mesurée, reçue par des données GPS, etc.). L'accélération latérale seuil peut être de 2g. L'altitude peut être de plusieurs centaines de mètres au-dessus du niveau de la mer.

Selon un mode avantageux de l'invention, le deuxième événement, déclenchant la sortie du système de commande du mode AWD ECO, consiste en : une vitesse du véhicule inférieure à une valeur seuil ; et/ou une température extérieure inférieure à une valeur seuil ; et/ou une déclivité supérieure à une valeur seuil ; et/ou une accélération latérale supérieure à une valeur seuil ; et/ou une altitude supérieure à une valeur seuil.

Selon un mode avantageux de l'invention, au moins une des valeurs seuil du premier événement diffère de la valeur seuil correspondante du deuxième événement, créant ainsi au moins une hystérésis entre l'entrée et la sortie du mode AWD ECO.

Par exemple la température seuil du premier événement pour passer dans le mode AWD ECO peut être de 10°C alors que la température seuil pour sortir du mode AWD ECO peut être de -5°C. Ce principe peut également s'appliquer à la vitesse, la déclivité, l'accélération latérale et/ou l'altitude.

Selon un mode avantageux de l'invention, après en être sorti provisoirement, le système est apte à retourner dans le mode AWD ECO lorsque ledit deuxième événement cesse et lorsque le premier événement survient.

Selon un mode avantageux de l'invention, le troisième événement consiste en : l'activation de l'ESP pendant une durée supérieure à une durée seuil ; et/ou le déclenchement de l'ABS ; et/ou la détection d'un dysfonctionnement d'un système de sécurité du véhicule. Alternativement ou en combinaison, le déclenchement d'un airbag ou de tout autre système de sécurité peut aussi servir de troisième événement.

Selon un mode avantageux de l'invention, seule une nouvelle mise en action du véhicule et la survenue du premier événement permettent le retour au mode AWD ECO suite à la sortie permanente du mode AWD ECO.

Une « nouvelle mise en action » se caractérise par la mise en route du véhicule après son extinction. Ainsi, l'arrêt du ou des moteurs n'est pas suffisant pour permettre le retour au mode AWD ECO lorsqu'une sortie « permanente » a été opérée.

L'invention porte également sur un véhicule automobile comprenant deux trains de roulement entraînables indépendamment, notamment au moyen d'une motorisation hybride comprenant au moins un moteur thermique entraînant le train avant et au moins un moteur électrique, à air comprimé et/ou hydraulique entraînant le train arrière, le véhicule étant remarquable en ce qu'il comprend un système de commande selon l'un des modes de réalisations décrits ci-dessus.

L'architecture mécanique du véhicule selon l'invention comprend des actionneurs connus et présentés par exemple en figure 1 du document FR 2 980 408 B1.

Ainsi dans un exemple préféré de l'invention, le véhicule comprend un moteur thermique attelé à une boîte de vitesse, une machine électrique reliée aux roues arrière, une machine électrique reliée à la boîte de vitesse, un démarreur connecté sur le réseau très basse tension (12V) et au moins une batterie (par exemple 220V) pour alimenter les machines électriques.

Le problème exposé ci-dessus peut également être résolu par un procédé de répartition du couple entre le train avant et le train arrière, comprenant au moins une étape de restriction du ratio de distribution à un intervalle autorisé qui est fonction du mode de conduite sélectionné et de la vitesse du véhicule, le procédé gouvernant le fonctionnement du système de commande selon l'un des modes de réalisation exposé ci-dessus.

Des avantages de la présente invention seront mieux compris à l'aide de la description et des dessins parmi lesquels :
- La figure 1 décrit un premier exemple de graphique restreignant le ratio de répartition du couple ;
- La figure 2 décrit un second exemple de graphique restreignant le ratio de répartition du couple ;
- La figure 3 décrit d'autres exemples ;
- La figure 4 décrit un exemple de distribution du couple en fonction d'une consigne conducteur ;
- La figure 5 illustre le passage d'un mode AWD à un mode AWD ECO.

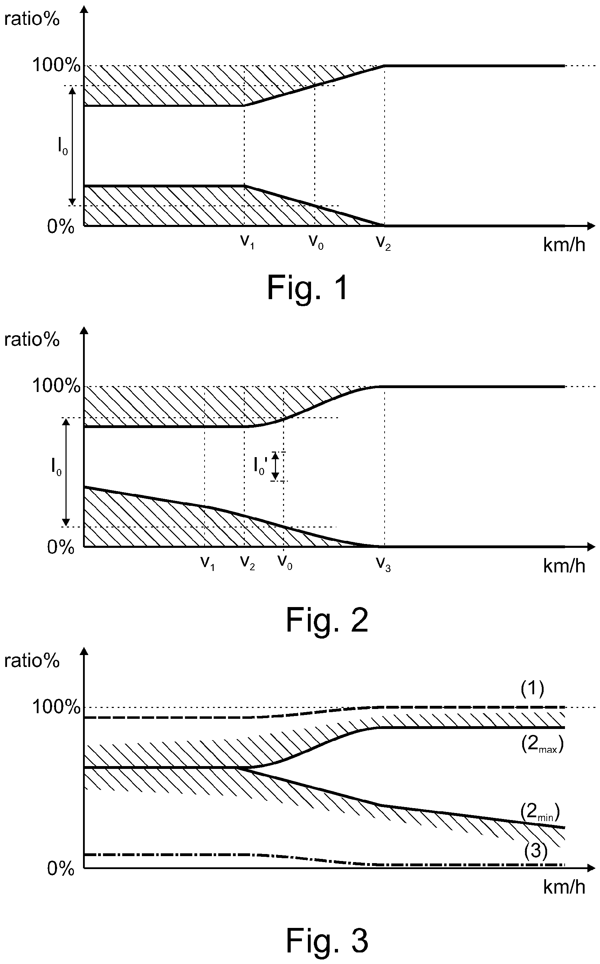

La figure 1 illustre les limitations qui peuvent être appliquées au ratio de répartition du couple. En abscisse se présente la vitesse du véhicule en km/h. En ordonnée figure le ratio de répartition du couple entre le train avant et le train arrière. Un ratio de 0% correspond à un couple complètement transmis sur le train arrière. Un ratio de 100% correspond à un couple complètement transmis sur le train avant.

Les zones hachurées sont des zones interdites pour le ratio. Ces zones sont délimitées par une courbe inférieure et une courbe supérieure qui définissent la valeur minimale et la valeur maximale bornant les intervalles possibles du ratio en fonction de la vitesse.

Dans cet exemple, deux valeurs seuil de vitesse v₁ et v₂ sont définies. En-dessous de v₁ et au-dessus de v₂, les valeurs minimale et maximale sont constantes. Entre v₁ et v₂, les valeurs minimales et maximales varient progressivement, par exemple linéairement.

Pour une vitesse donnée v₀ (ici représentée arbitrairement entre v₁ et v₂), ce graphique donne un intervalle I₀ qui borne le ratio. Cet intervalle est faible à basse vitesse et il est plus élevé à haute vitesse.

Par exemple, l'intervalle en-dessous de v₁ peut être de 30 à 70% ; v₁ peut être égal à 10 km/h et v₂ peut être égal à 25 km/h.

Au-dessus de v₂, l'intervalle autorisé peut être de 0 à 100%. En d'autres termes, aucune contrainte n'est appliquée sur le ratio de distribution du couple. Celui-ci sera donc indépendant de la vitesse.

La figure 2 représente un autre exemple de restriction du couple, par exemple dans un autre mode de conduite du même système de commande que la figure 1, ou dans le même mode de conduite mais dans un autre système de commande (pour un autre véhicule, pour le même véhicule dans un contexte ou des préférences utilisateur différents). La courbe de la valeur maximale présente une valeur constance en dessous de v₂, et au-dessus de vs. Entre v₂ et v₃ figure une courbe avec un point d'inflexion, telle que la pente de la courbe soit nulle en v₂ et nulle en vs. La courbe de la valeur minimale est linéairement décroissante en-dessous de v₁, nulle au-dessus de v₃ et présente également une courbe avec un point d'inflexion entre v₁ et v₃.

Pour une vitesse donnée v₀ (ici représentée arbitrairement entre v₂ et vs), ce graphique donne un intervalle I₀ qui borne le ratio. Cet intervalle peut être encore plus restreint par d'autres facteurs secondaires, notamment la valeur ou le signe du couple de consigne, la déclivité, la température extérieure, l'accélération latérale et/ou l'altitude. Ainsi, l'intervalle autorisé pour le couple dans ce cas est schématiquement représenté comme I₀' sur la figure 2.

Sur la figure 3 sont superposées des exemples de restrictions du ratio de répartition du couple dans 3 modes de conduite (1, 2, 3). Le mode (1) correspond à un mode typé « traction » où la quasi-totalité du couple est passée sur le train avant. A basse vitesse, le ratio est de 90% et à haute vitesse il est de 100%. Pour toutes valeurs de vitesse, la valeur minimale est égale à la valeur maximale. L'intervalle est donc réduit à un point pour chacune des valeurs de vitesse. Le mode (3) est similaire mais est typé « propulsion » avec la quasi-totalité du couple passé sur le train arrière. Le mode (2) comprend une portion à basse vitesse où le couple est restreint à un point pour chacune des vitesses, puis l'intervalle s'étend à hautes vitesses, borné par les courbes de la valeur maximale (notée 2ₘₐₓ) et minimale (notée 2ₘᵢₙ). Les hachures de la figure 3 représentent la zone interdite du couple dans le mode 2.

Bien que les graphiques des figures 1 à 3 illustrent une vitesse positive, il peut être envisagé d'étendre les courbes pour des vitesses négatives, c'est-à-dire en marche arrière. En fonction du mode engagé, le ratio peut ainsi être régi par le même type d'intervalles qui varient avec la vitesse, même négative. Les ordres de grandeur des vitesses en marche arrière étant différent des ordres de grandeur en marche avant, on pourra par exemple prévoir un intervalle restreint de 0 à 2 km/h, puis un intervalle plus grand au-delà de 2 km/h en marche arrière. Si on compte la vitesse en marche arrière comme une valeur négative de la vitesse, la notion « d'intervalle croissant ou constant avec la vitesse » s'appliquera à la valeur absolue de la vitesse.

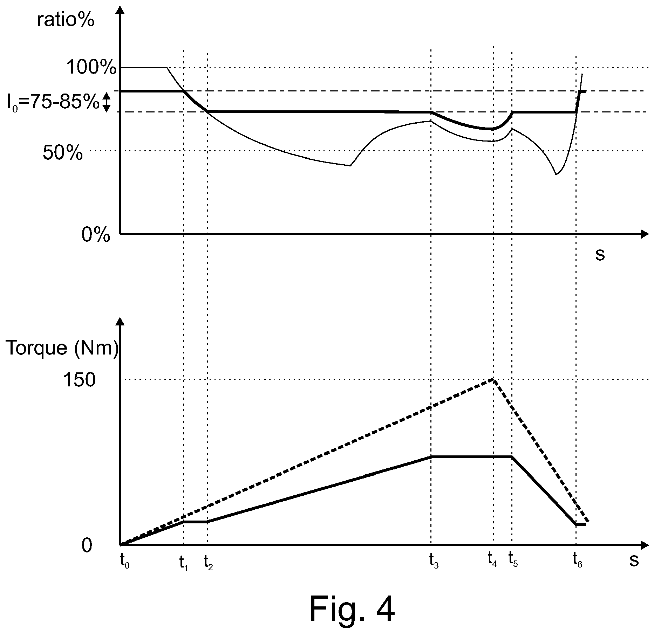

La figure 4 illustre un exemple de courbe de ratio en fonction d'une consigne de couple du conducteur. Les deux graphiques sont synchrones et ont pour abscisse le temps.

La partie supérieure représente le ratio en pourcentage entre le couple transmis au train avant et celui transmis au train arrière. La courbe en trait fin représente le ratio du couple en fonction du temps, si le ratio n'est pas borné. N'étant pas borné, le ratio peut prendre n'importe quelle valeur entre 0 et 100% en fonction des conditions de roulage. La courbe en trait épais représente le ratio du couple en fonction du temps, lorsque celui-ci est borné par l'intervalle I₀=[75% ; 85%]. Pour simplifier le graphique, dans ce cas précis, l'intervalle est constant sur la plage de valeurs de vitesse du véhicule durant la durée observée.

La partie inférieure représente en trait interrompu la consigne de couple donnée par le conducteur. Dans cet exemple, la consigne consiste en une augmentation linéaire du couple puis une diminution linéaire. Cette consigne peut résulter d'un enfoncement pédale progressivement croissant avec le temps (et la vitesse) jusqu'à un instant ou la pédale est progressivement relâchée. Le trait continu correspond au couple sur le train avant (en valeur absolue).

A t=t₀, la consigne commence à augmenter. Le couple sur le train avant augmente proportionnellement à la consigne dans un ratio de 85% qui est la borne maximale dans ce mode et pour cette vitesse. Un peu avant l'instant t₁, les conditions de roulages sont telles que plus de couple doit être porté sur les roues arrière. La courbe en trait fin du ratio non borné commence à diminuer. A l'instant t₁, la diminution de la courbe en trait fin atteint 85%. Jusqu'à t₂, le ratio borné suit donc celui non-borné. En t₂, le ratio borné reste stable à 75% car il ne lui est pas permis de descendre plus. Le couple de consigne continue d'augmenter et le couple sur le train avant augmente proportionnellement (cette fois-ci avec un facteur de 75%).

A l'instant t₃, le couple demandé dépasse les limites mécaniques d'au moins un organe d'entraînement. Par exemple, le couple demandé à un moteur a atteint le maximum du couple délivrable par ce moteur, ou la boîte de vitesse ne peut pas passer le couple sur l'un des trains. Le couple sur le train avant atteint donc un palier de saturation en t₃ qui subsiste jusqu'en t₅ lorsque le couple de consigne redescend.

Dans ce cas, le ratio de distribution du couple ne peut être maintenu plus longtemps dans l'intervalle 75-85%. Si tel était le cas, la volonté d'accélération (par exemple) du conducteur ne serait pas répercutée sur les roues car pour maintenir le ratio dans les bornes de l'intervalle il conviendrait de limiter également le couple sur les roues arrière. Le ratio va donc chuter entre t₃ et t₄ en dehors de l'intervalle 75-85%.

A l'instant t₄, le couple de consigne atteint un maximum, après quoi la consigne diminue. Le ratio du couple sur le train avant remonte entre t₄ et t₅. A l'instant t₅, il a retrouvé la valeur inférieure de l'intervalle autorisé de 75%.

Peu avant t₆, les conditions de roulage sont telles que le ratio non-borné tend à remonter. A t₆, celui-ci atteint la borne inférieure. Le ratio borné va donc suivre la courbe qu'aurait un ratio non borné jusqu'à atteindre la borne supérieure de I₀.

De par cette gestion du ratio du couple, le risque de glissement d'une des roues entre t0 et t1 est prévenu, tout en évitant de limiter le ratio du couple à une seule valeur qui pourrait donner lieu à une surconsommation inutile de carburant.

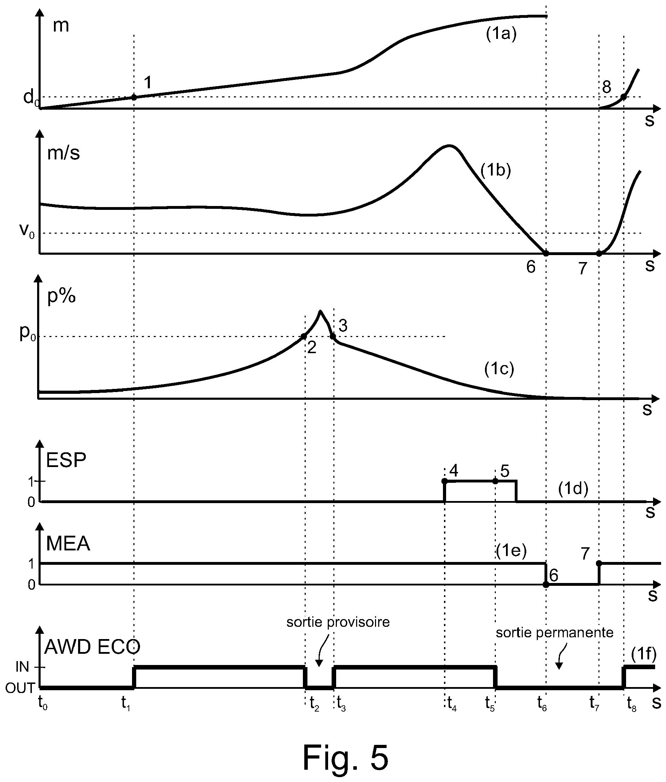

La figure 5 illustre un chronogramme décrivant le fonctionnement du système de commande basculant entre les modes AWD et AWD ECO. Les courbes (1a) à (1f) décrivent respectivement : (1a) la distance, (1b) la vitesse, (1c) la déclivité, (1d) l'état de mise en action du véhicule, (1e) l'état de l'ESP et (1f) l'état du mode AWD ECO. Toutes les courbes sont synchrones et ont pour axe des abscisses le temps. Les courbes (1a) à (1c) montrent les valeurs seuil respectives, notées d₀, v₀ et p₀.

A l'instant t₀, le conducteur active le mode AWD. La courbe (1a) montre la distance relative qui est parcourue à partir de cet instant t₀.

A l'instant t₁, la distance parcourue depuis l'activation du mode AWD est égale à une valeur seuil d₀. Le point 1 de la courbe (1a) matérialise la survenue de ce premier événement. Comme aucun besoin de motricité n'est détecté (qui serait dû par exemple à la pente, l'accélération latérale, la température ou le déclenchement de l'ESP), il est considéré qu'une économie de carburant peut être faite et le système de commande bascule en mode AWD ECO.

A l'instant t₂, la déclivité, ou la pente en % sur laquelle le véhicule roule dépasse une valeur seuil p₀. Un besoin de motricité est donc détecté et le mode AWD ECO est donc quitté provisoirement. Lorsque la pente retombe en-dessous de la valeur seuil p₀, à l'instant t₃, le mode AWD ECO est réactivé. Les points 2 et 3 de la courbe (1c) matérialisent ces événements.

A l'instant t₄, l'ESP se déclenche. Le mode AWD ECO est maintenu malgré l'activation de l'ESP. Ce n'est que lorsque la durée de déclenchement de l'ESP dépasse une valeur seuil que le mode AWD ECO est quitté. Cette durée seuil correspond à la différence t₅-t₄. Ainsi, à l'instant t₅, l'ESP a été déclenché pendant suffisamment longtemps pour que le mode AWD ECO soit quitté, cette fois-ci de manière permanente. Les points 4 et 5 de la courbe (1d) matérialisent ces événements.

L'ESP cesse de fonctionner un peu après t₅ mais le mode AWD ECO n'est plus réactivé bien que les conditions de distance, température, déclivité accélération latérale et vitesse soient remplies, car la sortie du mode AWD ECO qui a été effectuée en t₅ est permanente.

A l'instant t₆, le conducteur arrête le véhicule et l'éteint. A l'instant t₇, une nouvelle mise en action est opérée. Les points 6 et 7 sur les courbes (1b) et (1e) matérialisent ces événements.

Par hypothèse dans cet exemple, à l'instant t₇, le véhicule est en mode AWD, soit grâce à la mémoire du système de commande qui a maintenu le véhicule dans le dernier mode avant extinction, soit par action du conducteur.

A l'instant t₈, la distance parcourue depuis la (nouvelle) mise en mode AWD correspond à d₀. La vitesse est au-dessus du seuil v₀. Le système de commande bascule donc en mode AWD ECO.

## Revendications

1. Système de commande d'un groupe motopropulseur pour véhicule automobile comprenant deux trains de roues motrices, les deux trains étant indépendamment entraînables, le système de commande contrôlant des moyens de distribution du couple pour distribuer le couple produit par le ou les moyens moteurs du véhicule entre un couple transmis au train avant et un couple transmis au train arrière, le système de commande étant **caractérisé en ce qu'**il peut fonctionner selon plusieurs modes de conduite sélectionnables (1, 2, 3) par l'occupant du véhicule dont un mode sélectionné pour lequel l'intervalle n'est pas réduit à une unique valeur pour une vitesse donnée du véhicule (V0), le système agissant sur les moyens de distribution du couple pour restreindre le ratio de répartition du couple entre le train avant et le train arrière à un intervalle borné (I₀, I₀') par une valeur minimale (2ₘᵢₙ) et une valeur maximale (2ₘₐₓ) qui dépendent de la vitesse du véhicule (V₀) et du mode de conduite sélectionné (1, 2, 3), l'intervalle étant croissant ou constant avec la vitesse (V₀).

2. Système de commande selon la revendication 1, **caractérisé en ce que** pour au moins un des modes de conduite,
- la valeur minimale (2ₘᵢₙ) du ratio est constante en-dessous d'une première valeur seuil de vitesse (V₁) et/ou au-delà d'une seconde valeur seuil (V₂) ; et/ou
- la valeur maximale (2ₘₐₓ) du ratio est constante en-dessous d'une première valeur seuil (V₁) de vitesse et/ou au-delà d'une seconde valeur seuil (V₂) ; et/ou
- la valeur minimale (2ₘᵢₙ) diminue en fonction de la vitesse (V₀) entre une première valeur seuil (V₁) de vitesse et une seconde valeur (V₂) seuil de vitesse ; et/ou
- la valeur maximale (2ₘₐₓ) augmente en fonction de la vitesse (V₀) entre une première valeur seuil (V₁) de vitesse et une seconde valeur seuil (V₂) de vitesse.

3. Système de commande selon la revendication 2, **caractérisé en ce que** au moins l'une des première et seconde valeurs seuil de vitesse (V₁, V₂) d'un mode de conduite (1, 2, 3) diffère de la valeur seuil respective d'un autre mode de conduite (1, 2, 3).

4. Système selon l'une des revendications 1 à 3, **caractérisé en ce que** les valeurs minimale (2ₘᵢₙ) et maximale (2ₘₐₓ) du ratio sont respectivement comprises entre 25 et 35%, et entre 65 et 75% en-dessous d'une vitesse seuil (V₁) de 10 km/h +/-5 km/h.

5. Système selon l'une des revendications 1 à 4, **caractérisé en ce que** les valeurs minimale (2ₘᵢₙ) et maximale (2ₘₐₓ) du ratio sont respectivement comprises entre 0% et 5%, et entre 95% et 100% au-dessus d'une vitesse seuil (V₂) de 25 km/h +/-10 km/h.

6. Système selon l'une des revendications 1 à 5, **caractérisé en ce que** l'intervalle (I₀, I₀') de valeurs du ratio de distribution du couple est complémentairement restreint par la déclivité, la température extérieure, l'accélération latérale et/ou l'altitude.

7. Système selon l'une des revendications 1 à 6, **caractérisé en ce que** l'intervalle (I₀, I₀') de valeurs du ratio de distribution du couple est complémentairement restreint en fonction de la quantité de couple donné en consigne par le conducteur.

8. Système selon la revendication 7, **caractérisé en ce que** lorsque le couple de consigne est positif, l'intervalle (I₀, I₀') entre la valeur minimale (2ₘᵢₙ) et la valeur maximale (2ₘₐₓ) de ratio de distribution du couple est plus petit que lorsque le couple de consigne est négatif.

9. Système selon l'une des revendications 1 à 8, **caractérisé en ce qu'**il comprend au moins un mode (1, 2, 3) dans lequel l'intervalle (I₀, I₀') est réduit à une unique valeur pour une vitesse donnée.

10. Véhicule automobile comprenant deux trains de roulement entraînables indépendamment, notamment au moyen d'une motorisation hybride comprenant au moins un moteur thermique entraînant le train avant et au moins un moteur électrique, à air comprimé et/ou hydraulique entraînant le train arrière, le véhicule étant **caractérisé en ce qu'**il comprend un système de commande selon l'une des revendications 1 à 9.

## Patentansprüche

1. Steuersystem für den Antriebsstrang eines Fahrzeugs Kraftfahrzeug mit zwei Sätzen Antriebsrädern, wobei die beiden Sätze unabhängig voneinander antreibbar sind, wobei das Steuersystem Drehmomentverteilungsmittel steuert, um das von den Motormitteln des Fahrzeugs erzeugte Drehmoment zwischen einem auf die Vorderachse übertragenen Drehmoment und einem auf die Vorderachse übertragenen Drehmoment zu verteilen der Hinterachse, wobei das Steuersystem **dadurch gekennzeichnet ist, dass** es in mehreren vom Fahrzeuginsassen wählbaren Fahrmodi (1, 2, 3) arbeiten, einschließlich eines ausgewählten Modus, bei dem das Intervall für eine gegebene Fahrzeuggeschwindigkeit (V₀) nicht auf einen einzigen Wert reduziert wird, wobei das System auf die Drehmomentverteilung einwirkt Mittel zur Beschränkung des Drehmomentverteilungsverhältnisses zwischen der Vorderachse und der Hinterachse auf ein Intervall, das durch einen Mindestwert (2ₘᵢₙ) und einen Höchstwert (2ₘₐₓ) begrenzt (I₀, I₀') ist, die von der Fahrzeuggeschwindigkeit (V₀) und der Fahrzeuggeschwindigkeit (V₀) abhängen gewählter Fahrmodus (1, 2, 3), wobei das Intervall mit der Geschwindigkeit (V₀) ansteigend oder konstant ist.

2. Steuerungssystem nach Anspruch 1, **dadurch gekennzeichnet, dass** für mindestens einen der Fahrmodi,
- der Minimalwert (2ₘᵢₙ) des Verhältnisses ist unterhalb eines ersten Geschwindigkeitsschwellenwerts (V₁) und/oder oberhalb eines zweiten Geschwindigkeitsschwellenwerts (V₂) konstant; und oder
- der Maximalwert (2ₘₐₓ) des Verhältnisses ist unterhalb eines ersten Geschwindigkeitsschwellenwerts (V₁) und/oder oberhalb eines zweiten Geschwindigkeitsschwellenwerts (V₂) konstant; und oder
- der Minimalwert (2ₘᵢₙ) nimmt in Abhängigkeit von der Geschwindigkeit (V₀) zwischen einem ersten Geschwindigkeitsschwellenwert (V₁) und einem zweiten Geschwindigkeitsschwellenwert (V₂) ab; und oder
- der Maximalwert (2max) steigt in Abhängigkeit von der Geschwindigkeit (V₀) zwischen einem ersten Geschwindigkeitsschwellenwert (V₁) und einem zweiten Geschwindigkeitsschwellenwert (V₂).

3. Steuerungssystem nach Anspruch 2, **dadurch gekennzeichnet, dass** sich mindestens einer der ersten und zweiten Geschwindigkeitsschwellenwerte (V₁, V₂) eines Fahrmodus (1, 2, 3) vom jeweiligen Schwellenwert d eines anderen Fahrmodus unterscheidet (1, 2, 3).

4. System nach einem der Ansprüche 1 bis 3, **dadurch gekennzeichnet, dass** die minimalen (2ₘᵢₙ) und maximalen (2ₘₐₓ) Werte des Verhältnisses jeweils zwischen 25 und 35 % und zwischen 65 und 75 % unter einer Geschwindigkeitsschwelle (V₁) liegen. von 10 km/h +/-5 km/h.

5. System nach einem der Ansprüche 1 bis 4, **dadurch gekennzeichnet, dass** die minimalen (2ₘᵢₙ) und maximalen (2ₘₐₓ) Werte des Verhältnisses jeweils zwischen 0 % und 5 % und zwischen 95 % und 100 % über einer Schwellengeschwindigkeit liegen (V₂) von 25 km/h +/-10 km/h.

6. System nach einem der Ansprüche 1 bis 5, **dadurch gekennzeichnet, dass** das Werteintervall (I₀, I₀') des Drehmomentverteilungsverhältnisses zusätzlich durch die Steigung, die Außentemperatur, die Querbeschleunigung und/oder die Höhe eingeschränkt wird.

7. System nach einem der Ansprüche 1 bis 6, **dadurch gekennzeichnet** das Intervall (I₀, I₀') der Werte des Drehmomentverteilungsverhältnisses zusätzlich in Abhängigkeit von der vom Fahrer als Sollwert vorgegebenen Drehmomentmenge eingeschränkt wird.

8. System nach Anspruch 7, **dadurch gekennzeichnet, dass** bei positivem Solldrehmoment der Abstand (I₀, I₀') zwischen dem Minimalwert (2ₘᵢₙ) und dem Maximalwert (2ₘₐₓ) des Drehmomentverteilungsverhältnisses nur dann kleiner ist, wenn das Solldrehmoment positiv ist Negativ.

9. System nach einem der Ansprüche 1 bis 8, **dadurch gekennzeichnet, dass** es mindestens einen Modus (1, 2, 3) umfasst, in dem das Intervall (I₀, I₀') für eine gegebene Geschwindigkeit auf einen einzigen Wert reduziert wird.

10. Kraftfahrzeug mit zwei unabhängig voneinander antreibbaren Fahrwerken, insbesondere mittels eines Hybridmotors, bestehend aus mindestens einem die Vorderachse antreibenden Wärmemotor und mindestens einem die Hinterachse antreibenden Elektro-, Druckluft- und/oder Hydraulikmotor, wobei das Fahrzeug **dadurch gekennzeichnet ist dass** es ein Steuerungssystem nach einem der Ansprüche 1 bis 9 umfasst.

## Claims

1. System for controlling a powertrain for a motor vehicle comprising two sets of drive wheels, the two trains being independently driveable, the control system controlling torque distribution means for distributing the torque produced by the motor means(s) of the vehicle between a torque transmitted to the front axle and a torque transmitted to the rear axle, the control system being **characterized in that** it can operate in several driving modes selectable (1, 2, 3) by the occupant of the vehicle including a mode selected for which the interval is not reduced to a single value for a given vehicle speed (V₀), the system acting on the torque distribution means to restrict the torque distribution ratio between the front axle and the rear axle at an interval bounded (I₀, I₀') by a minimum value (2ₘᵢₙ) and a maximum value (2ₘₐₓ) which depend on the speed of the vehicle (V₀) and the selected driving mode (1, 2, 3), the interval being increasing or constant with the speed (V₀).

2. Control system according to claim 1, **characterized in that** for at least one of the driving modes,
- the minimum value (2ₘᵢₙ) of the ratio is constant below a first speed threshold value (V₁) and/or beyond a second threshold value (V₂); and or
- the maximum value (2ₘₐₓ) of the ratio is constant below a first speed threshold value (V₁) and/or beyond a second threshold value (V₂); and or
- the minimum value (2ₘᵢₙ) decreases as a function of the speed (V₀) between a first speed threshold value (V₁) and a second speed threshold value (V₂); and or
- the maximum value (2ₘₐₓ) increases as a function of the speed (V0) between a first speed threshold value (V₁) and a second speed threshold value (V₂).

3. Control system according to claim 2, **characterized in that** at least one of the first and second speed threshold values (V₁, V₂) of a driving mode (1, 2, 3) differs from the respective threshold value d another driving mode (1, 2, 3).

4. System according to one of claims 1 to 3, **characterized in that** the minimum (2ₘᵢₙ) and maximum (2ₘₐₓ) values of the ratio are respectively between 25 and 35%, and between 65 and 75% below a speed threshold (V₁) of 10 km/h +/-5 km/h.

5. System according to one of claims 1 to 4, **characterized in that** the minimum (2ₘᵢₙ) and maximum (2ₘₐₓ) values of the ratio are respectively between 0% and 5%, and between 95% and 100% above a threshold speed (V₂) of 25 km/h +/-10 km/h.

6. System according to one of claims 1 to 5, **characterized in that** the interval (I₀, I₀') of values of the torque distribution ratio is additionally restricted by the slope, the exterior temperature, the lateral acceleration and/or altitude.

7. System according to one of claims 1 to 6, **characterized in that** the interval (I₀, I₀') of values of the torque distribution ratio is additionally restricted as a function of the quantity of torque given as a setpoint by the driver.

8. System according to claim 7, **characterized in that** when the set torque is positive, the interval (I₀, I₀') between the minimum value (2ₘᵢₙ) and the maximum value (2ₘₐₓ) of torque distribution ratio is smaller only when the set torque is negative.

9. System according to one of claims 1 to 8, **characterized in that** it comprises at least one mode (1, 2, 3) in which the interval (I₀, I₀') is reduced to a single value for a given speed .

10. Motor vehicle comprising two independently driveable running gears, in particular by means of a hybrid engine comprising at least one thermal engine driving the front axle and at least one electric, compressed air and/or hydraulic motor driving the rear axle, the vehicle being **characterized in that** it comprises a control system according to one of claims 1 to 9.
